# EUROPEAN PATENT APPLICATION

(11) **EP 4 080 431 A1**
(43) Date of publication of application: **26.10.2022**
(21) Application number: 21382345.3
(22) Date of filing: 21.04.2021
(51) Int. Cl.: G06Q 10/06, G06Q 50/04

(54) **SYSTEM FOR MONITORING AND CONTROLLING PRODUCTION LINES**

(71) Applicant: Airbus Operations, S.L.U., 28906 Getafe (Madrid) (ES)
(72) Inventor: RUIZ MORENO, Mercedes, 28906 GETAFE (Madrid) (ES); MARTINEZ CALVO, Sergio, 28906 GETAFE (Madrid) (ES); ÁLVAREZ LOPEZ, Alberto, 28906 GETAFE (Madrid) (ES)
(74) Representative: Herrero & Asociados, S.L.

(57) **Abstract**

A single AI system for monitoring and controlling in real time the performance of the production area. It connects the production elements designed to be connected and embracing, as well, the non-connectable ones, boosting productivity and product quality in a safer workplace. The AI system comprises:
- information extracting means for capturing physical information (210) from the production components (211) and convert the physical information (210) into digital information (220),
- gateways (30) configured to send the digital information (220) to the digital environment (20) of the loT (202) for computing and to be shared in a cloud storage (230),
- electronic processing means using AI algorithms (240) of the digital environment (20) configured to process the shared digital information (220) and information associated with a production task in the production line stored in a manufacturing execution system (MES), and to generate actions (250) based on the processed information, the AI algorithms (240) being configured to send the generated actions (250) to the physical production environment (10) or to external systems.

## Description

### Field of the invention

The present invention relates to the field of Artificial Intelligent (Al) systems as part of computer science, within the software and information technology.

More particularly, the present invention refers to a single artificial intelligent system for automatically monitoring and controlling in real time the performance of a complete production line in industrial processes, including the automatic monitorization and control of people, products and means involved in production areas (e.g., robots, tooling...), in order to boost people, product safety and optimization-efficiency of the production line (specially, applicable for aircraft production lines).

### Background of the invention

The global market evolution together with exigent and pressing demands have driven to adapt the enterprises to the fourth industrial revolution. The 4th industry revolution, or Industry 4.0, is the current industrial revolution that consist in automatizing and data exchange leading to an accelerated digital transformation by the digitalisation of industrial process thanks to the Cyberphysical systems, Cloud computing, and loT (Internet of Things).

Nowadays the aerospace industry is based in non-autonomous processes and relying to human decision making. In order to adapt the aircraft industry to the aforementioned market and demand, the focus on productivity, shorten product lifecycles and customer satisfaction has increased.

At the present, Manufacturing Execution Systems (MES) are already implemented in several enterprises, the aerospace industry included. A MES is an information system that serves as a functional layer between the ERP (Enterprise Resource Planning) and the process control systems on the factory floor, giving manufacturers real-time workflow visibility.

Smart manufacturing (SM) is a technology-driven approach that utilizes Internet-connected machinery to monitor the production process. SM is a specific application of the Industrial Internet of Things (IIoT). Deployments involve embedding sensors in manufacturing machines to collect data on their operational status and performance.

A shop floor is the area of a factory, machine shop, etc., where people work on machines, or the space in a retail establishment where goods are sold to consumers.

Smart Connected Shopfloor is an approach which focusses on artificial intelligence (Al), machine learning (ML), intelligent robotics, augmented reality (AR), smart devices and data analytics.

However, many artificial intelligence technologies are deployed in an 'isolated' manner, instead of being coordinated by an intelligent system connected to the enterprise's one, at the end 'orchesting' the complete production line.

Therefore, it is highly desirable to provide an intelligent ecosystem that allows automating and connecting the shopfloor, considering as well not connectable production elements such as workers, aircraft parts, old tools, safety equipments, etc., in order to increase optimization-efficiency in production areas and the product quality in a safer workplace.

### Summary of the invention

The present invention solves the aforementioned problems and overcomes previously explained state-of-art work limitations by providing a single artificial intelligent system which receives, processes, interprets and integrates digital information from different sources and locations, so that the system can generate and send orders to all the shopfloor 'actors' (workers, cobots, drons...) and to the connected systems in order to coordinate, monitor and control in real time an entire production line.

An aspect of the present invention refers to a system for controlling a production line according to claim 1.

The present invention has multiple applications, among others: detection of Personal Protection Equipment (PPE), detection of missing tools or FOds (FOd: Foreign Object Debris includes any object found in an inappropriate location that are likely, as a result of being in that location, to damage equipment or injure personnel), automatic task notification, identification of Non Value added activities, disruptive tasks and White Spaces (dedicated times without performing tasks to increase productivity). real time tracking of the workflow/production line, monitorization of coworking robots (cobots), competence matrix fulfilling, management of safety alerts as per production analogy, ergonomy risks, provision in advance of tooling/material/parts/etc.

The present invention has a number of advantages with respect to prior art, which can be summarized as follows:
- it provides automatization and a simplified manner of collecting data from the physical production environment and processing then to the digital environment, which allows to be computational efficient, having a minimized latency and reducing data exposure.
- it increases the safeness, optimisation and efficiency during production.
- it constitutes a smarter system than the MES because it does not require as much interaction by the operators of the production line as well as organizes the tasks, and also anticipates the needs of tools or qualified personnel to result in a more efficient production. Furthermore, the application of this single intelligent system leads to advantages such as: removal of extra task for operators, 5S (Sort, Set in order, Shine, Standardize, and Sustain the cycle) sustainability, detection of anomalies/deviation between the real configuration of the production line and a standard, removal of burocratic activities, quality improvement human errors avoidance, avoidance of injuries and accidents, industrial excellence, detailed view on Outstanding works, visibility on production in real time, visibility of areas of improvements and so more nimble resources management and time of response for disruptions.
- it connects not only what it is designed to be connected but also to embrace what is not connectable (such us parts, old tools, safety equipment, etc..) by means of the Al.

These and other advantages will be apparent in the light of the detailed description of the invention.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:
Figure 1 shows a schematic view of the two environments, a physical production environment and a digital environment, managed by a system for controlling a production line, according to a preferred embodiment.
Figure 2 shows a flow diagram of the main steps carried out by the system for controlling a production line, according to a preferred embodiment.

### Preferred embodiment of the invention

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

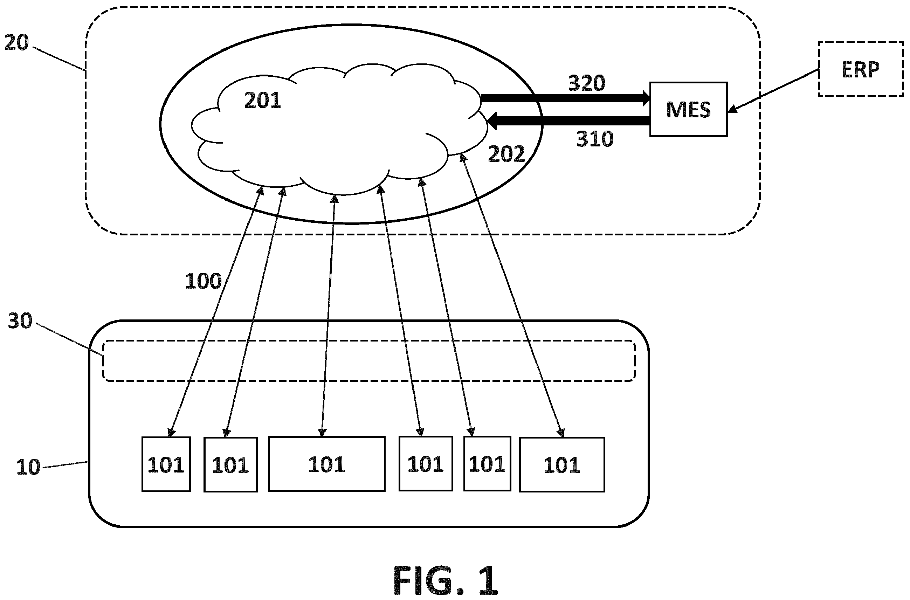

Figure 1 presents schematically how a single AI system, according to a preferred embodiment, constantly makes the information flow from the physical production environment (10) to the digital environment (20) and matches the retrieved information with all the applicable systems connected to the single AI system, in order to coordinate and to track a complete production line. Production information (100) is provided by a plurality of sources (101) comprising production components such as machines, aircraft parts, tools, safety elements, wearable gadgets (wearables), radiofrequency identification or RFID tags, cobots, automatic guided vehicles or AGVs, etc., as well as sensors and AI devices (e.g., cameras, microphones,...), acting as the receptors of a nervous system. All the information (100) passes through gateways (30), upwards and downwards, and it is cascaded through the nervous sub-systems or edges, to get into the Cloud (201) within the Internet of Things, IoTCloud (202), which provides computing resources such as data storage as per architecture predefined. According to the preferred embodiment, the single artificial intelligent system acts as a brain, retrieving data from the Cloud (201) and processing data by means of pre-stablished AI algorithms that take into account also data (310) from the Manufacturing Execution System (MES). In turn, the Cloud (201) transfers (320) updated data to the MES. The Enterprise Resource Planning (ERP), which provides an integrated and continuously updated view of core business processes, belongs as well to the digital environment (20) but the ERP is not considered by the IA, only for MES info. The complex algorithms are the enablers to interpret the digital environment (20) and allows to choose a decision about a 'subsequent step' to be executed. The algorithms are defined in the frame of the specific artificial Intelligence technologies which can be applied: computer vision, machine learning, speech....

Thanks to the described digital nervous system, many functionalities can be developed in different domains, for instance:
- Regarding People Safety or Safety Workplace: mandatory Personal Protection Equipment (PPE) detection, hazardous actions detection, 5S workplace organization method sustainability, support on accidents investigation, ergonomic risk alerts, safety equipment availability, safety risk as per production area analogy.
- Regarding Safety product: Foreign Object Debris (FOd) early detection, product anomalies detection, Tools identification and control.
- Regarding Productivity: a better resources availability mapping and sustainability of competence matrix as per performed executions, work progress tracking in real, non-value-added tasks identification, disruptive activities identification, early operation preparation.

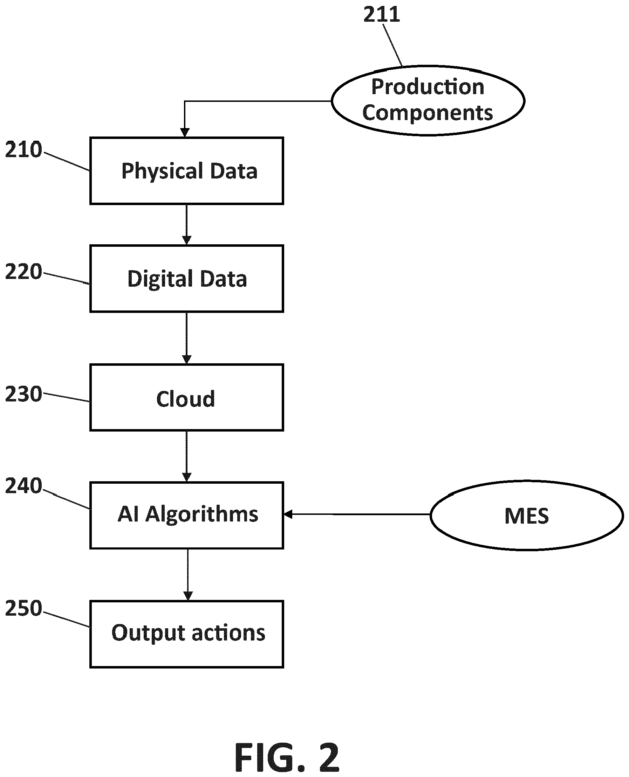

Figure 2 shows the main steps performed by the digital nervous system based on AI algorithms:
- Physical information (210), from production components (211) in the physical production environment (10), is captured and converted (e.g., through sensors or AI devices) into digital information (220) for the digital environment (20).
- The digital information (220) is sent to the loT (202) through gateways (30) for -cloud or edge- computing and shared in the cloud storage (230). Then, the digital information (220) shared in the cloud is interpreted by using complex artificial intelligent algorithms (240). These AI algorithms (240), provided by servers of the loT (202), use also the information on the Manufacturing Execution System (MES). A manufacturing execution system (MES) defined as an information system that connects, monitors and controls complex manufacturing systems and data flows on the factory floor.
- The output of these algorithms goes back as stimulated actions (250) to the physical production environment (10) and at the same time feeding/updating other external systems connected to the digital nervous system.

Thus, the AI system for controlling the production line uses a software, SW, hosted by the cloud and feed on both the digital information (220) that comes from the production environment (e.g., from a vision system of cameras) and the information about the tasks stored in the database of the manufacturing execution system (MES).

For example, get the real production time tracking thanks to the identification of the completion of a certain task, in whole or in part, can be done by identifying a specific signal from the operator to a vision system (e.g. a camera) or by the succession of images captured by the camera, e.g., comparing the image(s) captured by the vision system with an image or a pattern of images pre-stored in the intelligent AI system). By using cameras or other smart vision means, images are taken, later on processed to recognize the workers and identify an operation, either different operator signals can be recognized to notify (totally or partially) the operation or the artificial intelligence interprets task completed into the operation.

In addition, information about requires resources such as tools, materials, parts, etc., which are necessary during the next operation(s) can be gathered so that the system can determine a remaining time for complexion of each task.

In a possible embodiment, the AI system can identify and register specific process performed by the workers to upgrade/downgrade their self-attestation rights, in order to avoid bureaucracy in Quality Authorisation matrix management. For example, the AI algorithm can start a counter for each operator for a specific task and count a number x of times that the operator carries out the specific task under supervision and without non-conformance linked. After those x times, the operator get an upgrade of its quality authorisation or, on the contrary, a downgrade. Moreover, these work authorizations typically expire after a time period and they must be renewed. So the AI system can automate all the process to remove bureaucracy and to use this classification of tasks as input when reordering all the tasks in the workflow.

In addition, the Al system can also anticipate the operators' requirements or needs to do their tasks and send actions to connected systems in assistance to an operator. For example, the AI system can send commands to a robot to bring it closer to the operator or collaborate with him/her. The system informs the coworking robots about the environment conditions (people and objects surrounding) to allow safe execution of the activities and the robots, in turn, warn people approaching to them to avoid injuries too.

In another possible embodiment, the AI system can generate alerts. For example, the AI system can also launch an alert, in order to warn about an ergonomy risk. The operator's body positions while performing the tasks can be tracked (e.g., captured by the cameras) and stored. By processing the images obtained from the cameras it is possible to recognize repetitive movements or heavy loads carried out by the operator. In an example, if a match is identified with any pre-stored forbidden or not-recommended position, the AI system can start a risk counter (for example, a yellow flag associated with the operator), and if the operator repeats the "wrong" position a number of times exceeding a threshold, the warning is launched (e.g., the operator's flag turns into red). That risk counter can be used to avoid operator's injuries or for the operator's training and applied to an enterprise's accidents management tool. Safety alerts as per production analogy can also be generated by the AI system. By processing the images obtained from the cameras it is possible to know all elements used in different areas of production and an associated routing (linked to Work Order) given by the MES. By processing all these data, a mapping of tools, machines, materials per operation can be created periodically. Then, analogies or deviations can be detected and warnings are sent to a production leader.

A further possible embodiment is related to the detection of the operators' PPE. The PPE to be worn for a task by each operator is referenced in the MES. The PPEs can be tagged using RFID or with cameras. The AI system can issue a warning/alert if the PPE worn by the operator for a specific task is missing or wrong, comparing the PPE tracked in real time with the right PPE as stored in the MES for the specific task/operator.

Furthermore, in a possible embodiment, the AI system can read the RFID tags of all the tools used in each task, once the task is finished by all the associated operators, and if any tool is missing, the AI system can alert about it. This means time and money savings.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A system for controlling a production line in a physical production environment (10) comprising production components (211) involved in the production line, **characterized by** comprising:
- information extracting means configured to capture physical information (210) from the production components (211) and convert the physical information (210) into digital information (220),
- a plurality of gateways (30) configured to send the digital information (220) to a digital environment (20) defined by the Internet of Things (202) for computing and to be shared in a cloud storage (230),
- electronic processing means using artificial intelligent algorithms (240) of the digital environment (20) configured to process the shared digital information (220) and information associated with a production task in the production line stored in a manufacturing execution system (MES), and to generate actions (250) based on the processed information, the artificial intelligent algorithms (240) being configured to send the generated actions (250) to the physical production environment (10) or to external systems connected to servers providing the artificial intelligent algorithms (240).

2. The system according to claim 1, wherein the information extracting means are cameras, microphones, wearables, sensors or radio frequency identification, RFID, tags.

3. The system according to any preceding claim, wherein the electronic processing means are further configured to track in real time each task stored in the manufacturing execution system (MES) associated with each operator of the production line and to store information of the tracked task in the cloud storage (230).

4. The system according to claim 3, wherein tracking each task in real time comprises determining the task is completed by identifying at least a specific signal sent from the operator to the information extracting means.

5. The system according to any of claims 3-4, wherein tracking each task in real time comprises determining a remaining time for complexion of each task by using additional information shared in the cloud storage (230) about resources required for subsequent operations of the tracked task.

6. The system according to any preceding claim, wherein the electronic processing means are further configured to identify tasks to which a supervision is assigned by starting for an operator of the production line a counter counting a number of times that the operator performs a task under a quality authorisation and, after a given number of times, the system upgrades or downgrades the quality authorisation assigned to the operator.

7. The system according to claim 6, wherein the system renews the quality authorisation when a time period of expiration is reached.

8. The system according to any preceding claim, wherein the electronic processing means are further configured to send the generated actions (205) comprising commands to a robot to co-work with an operator of the production line and inform the robot about its environment conditions to safely execute the commands.

9. The system according to any preceding claim, wherein the electronic processing means are further configured to identify a not-recommended position for an operator of the production line by tracking the operator's body positions and count a number of times that the operator repeats the not-recommended position and, when the number of times exceeds a threshold, to generate an alert.

10. The system according to any preceding claim, wherein the electronic processing means are further configured to create a mapping of tools, machines and materials per operation associated with a production task stored in the manufacturing execution system (MES) and, when analogies or deviations are detected in the mapping, to generate an alert.

11. The system according to any preceding claim, wherein the electronic processing means are further configured to detect a personal protection equipment, PPE, referenced in the manufacturing execution system (MES) for an operator of the production line and track in real time the PPE by using the information extracting means and, when comparing the tracked PPE with the referenced PPE stored in the manufacturing execution system (MES) results in deviations, to generate an alert.

12. The system according to claim 11, wherein the PPE is tracked in real time by using RFID tags.

13. The system according to any preceding claim, wherein the electronic processing means are further configured to identify each tool used in each task of the production line stored in the manufacturing execution system (MES) and track in real time the tool by using the information extracting means and, when a loss of the tracked tool is detected, to generate an alert.

14. The system according to claim 13, wherein the tool is tracked in real time by using RFID tags.
